(19) Europäisches Patentamt / European Patent Office / Office européen des brevets

(11) EP 3 655 445 B1

(12) **EUROPEAN PATENT SPECIFICATION**

(45) Date of publication and mention of the grant of the patent:
**13.12.2023 Bulletin 2023/50**

(21) Application number: **18737578.7**

(22) Date of filing: **03.07.2018**

(51) International Patent Classification (IPC):
***C08F 210/06*** *(2006.01)* ***C08F 4/657*** *(2006.01)*
***C08J 5/18*** *(2006.01)*

(52) Cooperative Patent Classification (CPC):
(C-Sets available)
**C08F 210/06; C08J 5/18;** C08J 2323/14 (Cont.)

(86) International application number:
**PCT/EP2018/067900**

(87) International publication number:
**WO 2019/015949 (24.01.2019 Gazette 2019/04)**

(54) **PROPYLENE COPOLYMERS**

PROPYLENCOPOLYMERE

COPOLYMÈRE EN POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2017 EP 17182151**

(43) Date of publication of application:
**27.05.2020 Bulletin 2020/22**

(73) Proprietor: **Basell Poliolefine Italia S.r.l.**
**20127 Milano (IT)**

(72) Inventors:
- **MASSARI, Paola**
  **44122 Ferrara (IT)**
- **CATHELIN, Caroline**
  **44122 Ferrara (IT)**
- **CAVALIERI, Claudio**
  **44122 Ferrara (IT)**
- **CIARAFONI, Marco**
  **44122 Ferrara (IT)**
- **PANTALEONI, Roberto**
  **44122 Ferrara (IT)**
- **MORINI, Giampiero**
  **44122 Ferrara (IT)**
- **VITALE, Gianni**
  **44122 Ferrara (IT)**
- **PIEMONTESI, Fabrizio**
  **44122 Ferrara (IT)**
- **COLLINA, Gianni**
  **44122 Ferrara (IT)**
- **GADDI, Benedetta**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2012/093099 WO-A1-2015/169831**
**WO-A1-2017/097578**

EP 3 655 445 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 4/6465;**
**C08F 210/06, C08F 4/6543;**
**C08F 210/06, C08F 4/6574;**
C08F 210/06, C08F 210/16, C08F 2500/12,
C08F 2500/26

## Description

FIELD OF THE INVENTION

The present disclosure relates to copolymers of propylene comprising 1-hexene for use in films, such as biaxially oriented polypropylene films (BOPP) and cast films having a low seal initiation temperature.

BACKGROUND OF THE INVENTION

Copolymer of propylene and 1-hexene are already known in the art, for example WO 2006/002778 relates to a copolymer of propylene and 1-hexene having from 0.2 to 5 wt% of 1-hexene derived units. This copolymer have a molecular weight distribution of monomodal type and are used for pipes systems.

WO 2009/077287 relates to a a copolymer of propylene with hexene-1 containing from 5 to 9% by weight of recurring units derived from hexene-1, said copolymer having a melting temperature from 125°C to 140°C and Melt Flow Rate (ASTM D1238, 230°C/2.16 kg) from 0.1 to 3 g/10 min.

WO 2015/062787 relates to a multimodal copolymers of propylene and 1-hexene having a content of 1-hexene derived units ranging from 0.6 wt% to 3.0 wt% especially suitable for the production of industrial sheets.

The applicant found that it is possible to produce BOPP and cast films having an low value of haze and a low seal initiation temperature (SIT) by using a multimodal propylene 1-hexene copolymer.

SUMMARY OF THE INVENTION

Thus the present disclosure provides a propylene 1-hexene copolymer containing from 5.7 to 7.7% by weight, of 1-hexene derived units having:

a) solubility in xylene at 25° C ranging from 7.0 wt% to 15.0 wt%;
b) the melting temperature, measured by DSC, ranging from 143.0 °C to 148.0 °C;
c) Melt Flow Rate (MFR, measured according to ASTM D 1238, 230°C/2.16 kg, i.e. at 230°C, with a load of 2.16 kg) from 3.5 to 8.0 g/10 min;
d) content of 1-hexene derived units in the fraction soluble in xylene at 25°C ranging from 13.5 wt% to 18.5 wt%

DETAILED DESCRIPTION OF THE INVENTION

The present disclosure provides a propylene 1-hexene copolymer containing from 5.7 to 7.7% by weight, preferably from 5.9 to 7.5% by weight, more preferably from 6.0 to 7.0% by weight of 1-hexene derived units having:

a) solubility in xylene at 25° C ranging from 7.0 wt% to 15.0 wt% preferably from 8.0wt% to 14.0 wt%; more preferably from 8.5 wt% to 13.5 wt%;
b) the melting temperature, measured by DSC, ranging from 143.0 °C to 148.0 °C; preferably from 144.0°C to 147.0°C;
c) Melt Flow Rate (MFR, measured according to ASTM D 1238, 230°C/2.16 kg, i.e. at 230°C, with a load of 2.16 kg) from 3.5 to 8.0 g/10 min; preferably from 3.8 to 7.5 g/10 min; more preferably from 4.0 to 6.5 g/10 min;
d) content of 1-hexene derived units in the fraction soluble in xylene at 25°C ranging from 13.5 wt% to 18.5 wt%; preferably from 14.0 wt% to 17.5 wt%; more preferably from 14.5 wt% to 17.0 wt%-

The propylene 1-hexene copolymer of the present disclosure contains only propylene and 1-hexene derived units.

The said amounts of 1-hexene units are referred to the total weight of the copolymer.

The melting temperature values are determined by differential scanning calorimetry (DSC), according to ISO 11357-3, with a heating rate of 20 °C/minute.

The propylene 1-hexene copolymer of the present disclosure are endowed with a low HAZE and a low seal initiating temperature (SIT) so that this material can be advantageously used for the production of film in particular cast or BOPP films. In particular the haze measured on a 50 μm film is lower than 0.40 % preferably lower than 0.30 %.

The propylene 1-hexene copolymer of the present disclosure can be obtained with polymerization processes carried out in the presence of stereospecific Ziegler-Natta catalysts supported on magnesium dihalides. By properly dosing the molecular weight regulator (preferably hydrogen).

As previously mentioned, the regulation of the molecular weight is carried out by using known regulators, hydrogen in particular.

The said stereospecific polymerization catalysts comprise the product of the reaction between:

1) a solid component, containing a titanium compound and an electron-donor compound (internal donor) supported on magnesium dihalide (preferably chloride);
2) an aluminum alkyl compound (cocatalyst); and, optionally,
3) an electron-donor compound (external donor).

Said catalysts are preferably capable of producing homopolymers of propylene having an isotactic index higher than 90% (measured as weight amount of the fraction insoluble in xylene at room temperature).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters and succinic acid esters.

Suitable succinic acid esters are represented by the formula (I):

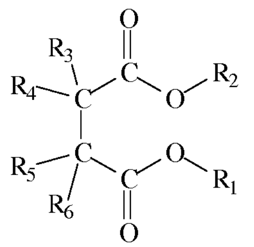

(I)

wherein the radicals $R_1$ and $R_2$, equal to or different from each other, are a C1-C20 linear or branched alkyl, alkenyl, cycloalkyl, aryl, arylalkyl or alkylaryl group, optionally containing heteroatoms; the radicals $R_3$ to $R_6$ equal to or different from each other, are hydrogen or a C1-C20 linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably C1-C8 alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from C1-C20 linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical). Examples of the said silicon compounds are those of formula $R_a^1R_b^2Si(OR^3)_c$, where a and b are integer numbers from 0 to 2, c is an integer from 1 to 3 and the sum (a+b+c) is 4; $R^1$, $R^2$, and $R^3$ are alkyl, cycloalkyl or aryl radicals with 1-18 carbon atoms optionally containing heteroatoms.

Thexyltrimethoxysilane (2,3-dimethyl-2-trimethoxysilyl-butane) is particularly preferred.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The said propylene -hexene-1 polymers are produced with a polymerization process illustrated in EP application 1 012 195.

In detail, the said process comprises feeding the monomers to said polymerisation zones in the presence of

catalyst under reaction conditions and collecting the polymer product from the said polymerisation zones. In the said process the growing polymer particles flow upward through one (first) of the said polymerisation zones (riser) under fast fluidisation conditions, leave the said riser and enter another (second) polymerisation zone (downcomer) through which they flow downward in a densified form under the action of gravity, leave the said downcomer and are reintroduced into the riser, thus establishing a circulation of polymer between the riser and the downcomer.

In the downcomer high values of density of the solid are reached, which approach the bulk density of the polymer. A positive gain in pressure can thus be obtained along the direction of flow, so that it become to possible to reintroduce the polymer into the riser without the help of special mechanical means. In this way, a "loop" circulation is set up, which is defined by the balance of pressures between the two polymerisation zones and by the head loss introduced into the system.

Generally, the condition of fast fluidization in the riser is established by feeding a gas mixture comprising the relevant monomers to the said riser. It is preferable that the feeding of the gas mixture is effected below the point of reintroduction of the polymer into the said riser by the use, where appropriate, of gas distributor means. The velocity of transport gas into the riser is higher than the transport velocity under the operating conditions, preferably from 2 to 15 m/s.

Generally, the polymer and the gaseous mixture leaving the riser are conveyed to a solid/gas separation zone. The solid/gas separation can be effected by using conventional separation means. From the separation zone, the polymer enters the downcomer. The gaseous mixture leaving the separation zone is compressed, cooled and transferred, if appropriate with the addition of make-up monomers and/or molecular weight regulators, to the riser. The transfer can be effected by means of a recycle line for the gaseous mixture.

The control of the polymer circulating between the two polymerisation zones can be effected by metering the amount of polymer leaving the downcomer using means suitable for controlling the flow of solids, such as mechanical valves.

The operating parameters, such as the temperature, are those that are usual in olefin polymerisation process, for example between 50 to 120° C.

This first stage process can be carried out under operating pressures of between 0.5 and 10 MPa, preferably between 1.5 to 6 MPa.

Advantageously, one or more inert gases are maintained in the polymerisation zones, in such quantities that the sum of the partial pressure of the inert gases is preferably between 5 and 80% of the total pressure of the gases. The inert gas can be nitrogen or propane, for example.

The various catalysts are fed up to the riser at any point of the said riser. However, they can also be fed at any point of the downcomer. The catalyst can be in any physical state, therefore catalysts in either solid or liquid state can be used.

The copolymer of the present disclosure can also contain additives commonly used for olefin polymers like, for example, nucleating and clarifying agents and processing aids.

The propylene 1-hexene copolymer of the present invention can be advantageously used for the production of films. Preferably cast or BOPP film mono or multilayer wherein at least one layer comprises the propylene 1-hexene copolymer of the present disclosure.

The following examples are given to illustrate the present invention without limiting purpose.

## EXAMPLES

The data relating to the polymeric materials and the films of the examples are determined by way of the methods reported below.

### Melting temperature (ISO 11357-3)

Determined by differential scanning calorimetry (DSC). A sample weighting 6 ± 1 mg, is heated to 200 ± 1° C at a rate of 20 °C/min and kept at 200 ± 1° C for 2 minutes in nitrogen stream and it is thereafter cooled at a rate of 20° C/min to 40 ± 2° C, thereby kept at this temperature for 2 min to crystallise the sample. Then, the sample is again fused at a temperature rise rate of 20° C/min up to 200° C ± 1. The melting scan is recorded, a thermogram is obtained (°C vs. mW), and, from this, temperatures corresponding to peaks are read. The temperature corresponding to the most intense melting peak recorded during the second fusion is taken as the melting temperature.

### Melt Flow Rate (MFR)

Determined according to ASTM D 1238, at 230° C, with a load of 2.16 kg.

Solubility in xylene at 25°C

2.5 g of polymer and 250 ml of xylene are introduced in a glass flask equipped with a refrigerator and a magnetical stirrer. The temperature is raised in 30 minutes up to the boiling pint of the solvent. The so obtained clear solution is then kept under reflux and stirring for further 30 minutes. The closed flask is then kept for 30 minutes in a bath of ice and water and in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

**Determination of 1-hexene content by NMR**

$^{13}C$ NMR spectra are acquired on an AV-600 spectrometer operating at 150.91 MHz in the Fourier transform mode at 120 °C. The peak of the propylene CH was used as internal reference at 28.83. The $^{13}C$ NMR spectrum is acquired using the following parameters:

| | |
|---|---|
| Spectral width (SW) | 60 ppm |
| Spectrum centre (O1) | 30 ppm |
| Decoupling sequence | WALTZ 65_64pl |
| Pulse program | ZGPG |
| Pulse Length (P1) | for 90° |
| Total number of points (TD) | 32K |
| Relaxation Delay | 15 s |
| Number of transients | 1500 |

The total amount of 1-hexene as molar percent is calculated from diad using the following relations:

$$[P] = PP + 0.5PH$$

$$[H] = HH + 0.5PH$$

Assignments of the $^{13}C$ NMR spectrum of propylene/1-hexene copolymers have been calculated according to the following table:

| Area | Chemical Shift | Assignments | Sequence |
|---|---|---|---|
| 1 | 46.93 - 46.00 | $S_{\alpha\alpha}$ | PP |
| 2 | 44.50 - 43.82 | $S_{\alpha\alpha}$ | PH |
| 3 | 41.34 -4.23 | $S_{\alpha\alpha}$ | HH |
| 4 | 38.00 - 37.40 | $S_{\alpha\gamma}+ S_{\alpha\delta}$ | PE |
| 5 | 35.70 -35.0 | $4B_4$ | H |
| 6 | 35.00 - 34.53 | $S_{\alpha\gamma}+ S_{\alpha\delta}$ | HE |
| 7 | 33.75 33.20 | CH | H |
| 8 | 33.24 | $T_{\delta\delta}$ | EPE |
| 9 | 30.92 | $T_{\beta\delta}$ | PPE |
| 10 | 30.76 | $S_{\gamma\gamma}$ | XEEX |

(continued)

| Area | Chemical Shift | Assignments | Sequence |
|---|---|---|---|
| 11 | 30.35 | $S_{\gamma\delta}$ | XEEE |
| 12 | 29.95 | $S_{\delta\delta}$ | EEE |
| 13 | 29.35 | $3B_4$ | H |
| 14 | 28.94 - 28.38 | CH | P |
| 15 | 27.43 - 27.27 | $S_{\beta\delta}$ | XEE |
| 16 | 24.67 -24.53 | $S_{\beta\beta}$ | XEX |
| 17 | 23.44 -23.35 | $2B_4$ | H |
| 18 | 21.80 - 19.90 | $CH_3$ | P |
| 19 | 14.22 | $CH_3$ | H |

**Seal Initiation Temperature (SIT)**

**Preparation of the film specimens**

Some films with a thickness of 50 μm are prepared by extruding each test composition in a a single screw Collin extruder (length/diameter ratio of screw 1:25) at a film drawing speed of 7 m/min and a melt temperature do 210-250 °C. Each resulting film is superimposed on a 1000 μm thick film of a propylene homopolymer having a xylene insoluble fraction of 97 wt% and a MFR L of 2 g/10 min. The superimposed films are bonded to each other in a Carver press at 200°C under a 9000 kg load, which is maintained for 5 minutes. The resulting laminates are stretched longitudinally and transversally, i.e. biaxially, by a factor 6 with a Karo 4 Brueckener film stretcher at 160°C, thus obtaining a 20 μm thick film (18 μm homopolymer+2 μm test).

Determination of the SIT.

Film Strips, 6 cm wide and 35 cm length are cut from the center of the BOPP film he film was superimposed with a BOPP film made of PP homopolymer. The superimposed specimens are sealed along one of the 2 cm sides with a Brugger Feinmechanik Sealer, model HSG-ETK 745. Sealing time is 5 seconds at a pressure of 0.14 MPa (20 psi). The starting sealing temperature is from about 10 °C less than the melting temperature of the test composition. The sealed strip is cut in 6 specimens 15 mm wide long enough to be claimed in the tensile tester grips. The seal strength is tested and load cell capacity 100 N, cross speed 100 mm/min and grip distance 50 mm. The results is expressed as the average of macimum seal strength (N). from are left to cool and then their unsealed ends are attached to an Instron machine where they are tested at a traction speed of 50 mm/min.

The test is than repeated by changing the temperature as follows:

If seal strength <1.5 N then increase the temperature
If seal strength >1.5 N then decrease the temperature

Temperature variation must be adjusted stepwise, if seal strength is close to target select steps of 1°C if the strength is far from target select steps of 2°C.
The target seal strength (SIT ) is defined as the lowest temperature at which a seal strength higher or equal to 1.5 N is achieved

The SIT. is the minimum sealing temperature at which the seal does not break when a load of at least 2 Newtons is applied in the said test conditions.

**Determination of the Haze**

Some films with a thickness of 50 μm are prepared by extruding each test composition in a a single screw Collin extruder (length/diameter ratio of screw 1:25) at a film drawing speed of 7 m/min and a melt temperature do 210-250 °C.

50 μm film speciments have been used. The haze value is measured using a Gardner photometric unit connected

to a Hazemeter type UX-10 or an equivalent instrument having G.E. 1209 light source with filter "C". Reference samples of known haze are used for calibrating the instrument according to ASTM D1003.

## Preparation of the copolymer of propylene with 1-hexene

### Examples 1-3 and comparative example 4

### Procedure for the preparation of the spherical adduct

Microspheroidal $MgCl_2 \cdot pC_2H_5OH$ adduct was prepared according to the method described in Comparative Example 5 of WO98/44009, with the difference that $BiCl_3$ in a powder form and in the amount of 3 mol% with respect to the magnesium has been added before feeding of the oil.

### Procedure for the preparation of the solid catalyst component

Into a 500 ml round bottom flask, equipped with mechanical stirrer, cooler and thermometer 300 ml of $TiCl_4$ were introduced at room temperature under nitrogen atmosphere. After cooling to 0°C, while stirring, diisobutylphthalate and 9.0 g of the spherical adduct (prepared as described above) were sequentially added into the flask. The amount of charged internal donor was such to meet a Mg/donor molar ratio of 8. The temperature was raised to 100°C and maintained for 2 hours. Thereafter, stirring was stopped, the solid product was allowed to settle and the supernatant liquid was siphoned off at 100°C. After the supernatant was removed, additional fresh $TiCl_4$ was added to reach the initial liquid volume again. The mixture was then heated at 120°C and kept at this temperature for 1 hour. Stirring was stopped again, the solid was allowed to settle and the supernatant liquid was siphoned off. The solid was washed with anhydrous hexane six times in temperature gradient down to 60°C and one time at room temperature. The obtained solid was then dried under vacuum and analyzed.

### Prepolymerization treatment

Before introducing it into the polymerization reactors, the solid catalyst component described above have been contacted with triethyl aluminum (TEAL) and Diisopropyl dimethoxy silane as external donor as reported in table 1.

### Polymerization

Copolymers are prepared by polymerising propylene and hexene-1 in the presence of a catalyst under continuous conditions in a plant comprising a polymerisation apparatus as described in EP 1 012 195 no barrier has been used.

The catalyst is sent to the polymerisation apparatus that comprises two interconnected cylindrical reactors, riser and downcomer. Fast fluidisation conditions are established in the riser by recycling gas from the gas-solid separator.

The main polymerization conditions are reported in table 1

Table 1

| Example | | **Comp 4** | **1** | **2** | **3** |
|---|---|---|---|---|---|
| TEAL/external donor | wt/wt | 6.5 | 6.5 | 6.5 | 6.5 |
| TEAL/catalyst | wt/wt | 5 | 5 | 5 | 5 |
| Temperature | °C | 81 | 86 | 86 | 86 |
| Pressure | bar-g | 21 | 21 | 21 | 21 |
| Split holdup riser | wt% | 40 | 40 | 40 | 40 |
| downcomer | wt% | 60 | 60 | 60 | 60 |
| C6 | mole% | 4.6 | 5.95 | 5.4 | 6.1 |
| $H_2/C_3^-$ | mol/mol | 0.016 | 0.016 | 0.016 | 0.016 |
| C6/C6+C3 | mol/mol | 0.052 | 0.07 | 0.064 | 0.073 |
| C3 = propylene; C6 = 1-hexene H2 = hydrogen | | | | | |

The polymer particles exiting the reactor are subjected to a steam treatment to remove the reactive monomers and volatile substances, and then dried.

The properties of the copolymer obtained in examples 1-4 are reported in table 2.

## Comparative example 5

Comparative example 5 is example 1 of PCT/EP2016/078415

The properties of the copolymers obtained in comparative example 5 are reported in table 2.

Table 2

| | | Ex 1 | Ex 2 | Ex 3 | Comp Ex 4 | Comp Ex 5 |
|---|---|---|---|---|---|---|
| 1-hexene content total | wt% | 6.0 | 6.5 | 7.0 | 4.7 | 7.4 |
| 1-hexene content in the fraction soluble in Xylene at 25°C | wt% | 15.6 | 14.6 | 16.6 | 13.0 | nm |
| MFR | g/10 min | 5.8 | 6.7 | 5.7 | 4.5 | 4.4 |
| xylene solubles 25°C | wt% | 9.1 | 10.7 | 13.0 | 3.8 | 18.0 |
| melting temperatures | °C | 144.6 | 144.8 | 145.8 | 146.5 | 143.7 |
| Haze (film) | % | 0.21 | 0.40 | 0.20 | 0.79 | 0.55 |
| SIT | °C | 106 | 103 | 100 | 114 | 91 |
| nm= not measured | | | | | | |

From table 2 the copolymers of examples 1-3 have better haze with respect to the copolymer of comparative examples 4 and 5.

## Claims

1. A propylene 1-hexene copolymer containing from 5.7 to 7.7% by weight, of 1-hexene derived units having:

   a) solubility in xylene at 25° C ranging from 7.0 wt% to 15.0 wt%;
   b) the melting temperature, measured by DSC according to ISO 11357-3 ranging from 143.0 °C to 148.0° C;
   c) Melt Flow Rate (MFR, measured according to ASTM D 1238, 230°C/2.16 kg, from 3.5 to 8.0 g/10 min.
   d) content of 1-hexene derived units in the fraction soluble in xylene at 25°C ranging from 13.5 wt% to 18.5 wt%

2. The propylene 1-hexene copolymer according to claim 1 containing from 5.9 to 7.5% by weight of 1-hexene derived units.

3. The propylene 1-hexene copolymer according to claims 1 or 2 containing from from 6.0 to 7.0% by weight of 1-hexene derived units.

4. The propylene 1-hexene copolymer according to anyone of claims 1-3 wherein the solubility in xylene at 25° C ranges from 8.0wt% to 14.0 wt%.

5. The propylene 1-hexene copolymer according to anyone of claims 1-4 wherein the solubility in xylene at 25° C ranges from 8.5 wt% to 13.5 wt%.

6. The propylene 1-hexene copolymer according to anyone of claims 1-5 wherein the melting temperature, measured by DSC, ranges from 144.0°C to 147.0°C.

7. The propylene 1-hexene copolymer according to anyone of claims 1-6 having the content of 1-hexene derived units in the fraction soluble in xylene at 25°C ranging from 14.0 wt% to 17.5 wt%.

8. The propylene 1-hexene copolymer according to anyone of claims 1-7 having the content of 1-hexene derived units in the fraction soluble in xylene at 25°C ranging from 14.5 wt% to 17.0 wt%.

9. The propylene 1-hexene copolymer according to anyone of claims 1-8 wherein the Melt Flow Rate ranges from 3.8 to 7.5 g/10 min.

10. The propylene 1-hexene copolymer according to anyone of claims 1-8 wherein the Melt Flow Rate ranges from 4.0 to 6.0 g/10 min

11. A film comprising the propylene 1-hexene copolymer of claims 1-10.

12. A BOPP film according to claim 11 comprising the propylene 1-hexene copolymer of claims 1-10.

## Patentansprüche

1. Propylen-1-Hexen-Copolymer, das 5,7 bis 7,7 Gew.% von 1-Hexen abgeleitete Einheiten enthält, und aufweist:

   a) eine Löslichkeit in Xylol bei 25 °C im Bereich von 7,0 Gew.% bis 15,0 Gew.%;
   b) eine Schmelztemperatur, gemessen mittels DSC gemäß ISO 11357-3, im Bereich von 143,0 °C bis 148,0 °C;
   c) eine Schmelzflussrate (MFR, gemessen gemäß ASTM D 1238, 230 °C/2,16 kg, von 3,5 bis 8,0 g/10 min;
   d) einen Gehalt an von 1-Hexen abgeleiteten Einheiten in der in Xylol bei 25 °C löslichen Fraktion im Bereich von 13,5 Gew.% bis 18,5 Gew.%.

2. Propylen-1-Hexen-Copolymer nach Anspruch 1, das 5,9 bis 7,5 Gew.% von 1-Hexen abgeleitete Einheiten enthält.

3. Propylen-1-Hexen-Copolymer nach Anspruch 1 oder 2, das 6,0 bis 7,0 Gew.% von 1-Hexen abgeleitete Einheiten enthält.

4. Propylen-1-Hexen-Copolymer nach einem der Ansprüche 1 bis 3, wobei die Löslichkeit in Xylol bei 25 °C im Bereich von 8,0 Gew.% bis 14,0 Gew.% liegt.

5. Propylen-1-Hexen-Copolymer nach einem der Ansprüche 1 bis 4, wobei die Löslichkeit in Xylol bei 25 °C im Bereich von 8,5 Gew.% bis 13,5 Gew.% liegt.

6. Propylen-1-Hexen-Copolymer nach einem der Ansprüche 1 bis 5, wobei die Schmelztemperatur, gemessen mittels DSC, im Bereich von 144,0 °C bis 147,0 °C liegt.

7. Propylen-1-Hexen-Copolymer nach einem der Ansprüche 1 bis 6 mit einem Gehalt an von 1-Hexen abgeleiteten Einheiten in der in Xylol bei 25 °C löslichen Fraktion im Bereich von 14,0 Gew.% bis 17,5 Gew.%.

8. Propylen-1-Hexen-Copolymer nach einem der Ansprüche 1 bis 7 mit einem Gehalt an von 1-Hexen abgeleiteten Einheiten in der in Xylol bei 25 °C löslichen Fraktion im Bereich von 14,5 Gew.% bis 17,0 Gew.%.

9. Propylen-1-Hexen-Copolymer nach einem der Ansprüche 1 bis 8, wobei die Schmelzflussrate im Bereich von 3,8 bis 7,5 g/10 min liegt.

10. Propylen-1-Hexen-Copolymer nach einem der Ansprüche 1 bis 8, wobei die Schmelzflussrate im Bereich von 4,0 bis 6,0 g/10 min liegt.

11. Film, umfassend das Propylen-1-Hexen-Copolymer nach den Ansprüchen 1 bis 10.

12. BOPP-Film nach Anspruch 11, umfassend das Propylen-1-Hexen-Copolymer nach den Ansprüchen 1 bis 10.

## Revendications

1. Copolymère de propylène-1-hexène contenant 5,7 à 7,7 % en poids de motifs dérivés de 1-hexène présentant :

a) une solubilité dans le xylène à 25 °C située dans la plage de 7,0 % en poids à 15,0 % en poids ;
b) une température de fusion, mesurée par DSC selon la norme ISO 11357-3, située dans la plage de 143,0 °C à 148,0 °C ;
c) un indice de fluidité à chaud (MFR, mesuré selon la norme ASTM D 1238, 230 °C/2,16 kg, de 3,5 à 8,0 g/10 min ;
d) une teneur en motifs dérivés de 1-hexène dans la fraction soluble dans le xylène à 25 °C située dans la plage de 13,5 % en poids à 18,5 % en poids.

**2.** Copolymère de propylène-1-hexène selon la revendication 1, contenant 5,9 à 7,5 % en poids de motifs dérivés de 1-hexène.

**3.** Copolymère de propylène-1-hexène selon les revendications 1 ou 2, contenant 6,0 à 7,0 % en poids de motifs dérivés de 1-hexène.

**4.** Copolymère de propylène-1-hexène selon l'une quelconque des revendications 1 à 3, la solubilité dans le xylène à 25 °C étant située dans la plage de 0,8 % en poids à 14,0 % en poids.

**5.** Copolymère de propylène-1-hexène selon l'une quelconque des revendications 1 à 4, la solubilité dans le xylène à 25 °C étant située dans la plage de 8,5 % en poids à 13,5 % en poids.

**6.** Copolymère de propylène-1-hexène selon l'une quelconque des revendications 1 à 5, la température de fusion, mesurée par DSC, étant située dans la plage de 144,0 °C à 147,0 °C.

**7.** Copolymère de propylène-1-hexène selon l'une quelconque des revendications 1 à 6, la teneur en motifs dérivés de 1-hexène dans la fraction soluble dans le xylène à 25 °C étant située dans la plage de 14,0 % en poids à 17,5 % en poids.

**8.** Copolymère de propylène-1-hexène selon l'une quelconque des revendications 1 à 7, la teneur en motifs dérivés de 1-hexène dans la fraction soluble dans le xylène à 25 °C étant située dans la plage de 14,5 % en poids à 17,0 % en poids.

**9.** Copolymère de propylène-1-hexène selon l'une quelconque des revendications 1 à 8, l'indice de fluidité à chaud étant situé dans la plage de 3,8 à 7,5 g/10 min.

**10.** Copolymère de propylène-1-hexène selon l'une quelconque des revendications 1 à 8, l'indice de fluidité à chaud étant situé dans la plage de 4,0 à 6,0 g/10 min.

**11.** Film comprenant le copolymère de propylène-1-hexène selon les revendications 1 à 10.

**12.** Film en BOPP selon la revendication 11, comprenant le copolymère de propylène-1-hexène selon les revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006002778 A
- WO 2009077287 A
- WO 2015062787 A
- US 4399054 A
- EP 45977 A
- EP 361493 A
- EP 728769 A
- EP 1012195 A
- WO 9844009 A
- EP 2016078415 W